# EUROPÄISCHE PATENTANMELDUNG

(11) **EP 1 207 374 A1**
(43) Veröffentlichungstag der Anmeldung: **22.05.2002**
(21) Anmeldenummer: 01124847.3
(22) Anmeldetag: 18.10.2001
(51) Int. Cl.: G01F 1/58

(54) **Magnetisch-induktives Durchflussmessgerät**

(30) Priorität: 19.10.2000 DE 10051868
(71) Anmelder: ABB PATENT GmbH, 68526 Ladenburg (DE)
(72) Erfinder: Keese, Dieter, 37194 Wahlsburg (DE)
(74) Vertreter: Schmidt, Karl Michael, Dipl.-Phys.

(57) **Zusammenfassung**

Die Erfindung betrifft ein magnetisch-induktives Durchflußmeßgerät mit einem Meßrohr und einem das Meßrohr umgebenden Magnetsystem sowie Meß- und Erdungselektroden gemäß Oberbegriff des Patentanspruches 1. Um hierbei einen besseren mechanischen und feuchtigkeitsmäßigen Schutz mit einer einzigen gemeinsamen Maßnahme zu schaffen und Rißbildung zu vermeiden, ist in erfindungsgemäßer Weise das Meßrohr (1) und die magnetische Polanordnung (4) samt Spule (3) und Polblechen einstückig von einem Thermoplast umspritzt sind.

## Beschreibung

Die Erfindung betrifft ein magnetisch-induktives Durchflußmeßgerät mit einem Meßrohr und einem das Meßrohr umgebenden Magnetsystem gemäß Oberbegriff des Patentanspruches 1.

Magnetisch-induktive Durchflußmeßgeräte sind in vielfältiger Art bekannt. Durchflußmeßgeräte dieser Art weisen ein Meßrohr auf, sowie ein das Maßrohr umgebendes Magnetsystem und darüber hinausgehend auch Meß- und Erdungselektroden.

Aus der US-Patentschrift 4, 774, 844 ist ein Durchflußmeßgerät dieser Art bekannt. Dieses besteht aus einem Metallrahmen, in dem ein Elektromagnetenpaar und ein Elektrodenpaar montiert sind. Zum Schutz gegen Feuchtigkeit und Umwelteinflüsse sowie auch zur Herstellung einer ortsfesten kompakten Bauform werden Teile des Durchflußmeßgerätes oder das selbe insgesamt nach der Montage vergossen. Bei diesem bekannten Durchflußmeßgerät ist das System nun so vergossen, daß sich damit ein umgebendes Gehäuse formt sowie auch in der Mittelachse, die entsprechend freigehalten wird, das Meßrohr mitgestaltet wird. Ein solcher Aufbau läßt sich jedoch nur dadurch realisieren, indem eine Vergußmasse verwendet wird, zumeist ein Epoxydharz, das eine innige klebende Verbindung zu dem Elektrodenmaterial herstellt. Bekanntermaßen sind vergossene Anordnungen großer Volumina erfahrungsgemäß sehr rißanfällig. Aus diesem Grund wird gemäß dem Gegenstand der genannten US-Patentschrift eine elastische Zwischenschicht mit eingelegt, die sogenannte Unterschiede der Temperaturkoeffizienten zwischen der Vergußmasse und den Einbauten ausgleichen soll.

Dennoch können innerhalb kompakter und komplexer Volumina Risse auftreten, die zwar nicht mehr insgesamt volumendurchgängig, jedoch teildurchgängig sind und somit gegebenenfalls doch elektrische Partien in der Vorrichtung gefährden können.

Im übrigen sind bei dieser bekannten Vorrichtung mehrere Maßnahmen nacheinander auszuführen, was die bekannte Einrichtung in ihrer Herstellung zu aufwendig sein läßt.

Der Erfindung liegt somit die Aufgabe zugrunde, mechanischer Schutz und Feuchtigkeitsschutz mit einer einzigen gemeinsamen Maßnahme erbringen zu können.

Die gestellte Aufgabe ist bei einem magnetisch-induktiven Durchflußmeßgerät erfindungsgemäß durch die kennzeichnenden Merkmale des Patentanspruches 1 gelöst.

Weitere vorteilhafte Ausgestaltungen des besagten magnetisch-induktiven Durchflußmeßgerätes sind in den nachfolgenden abhängigen Ansprüchen angegeben.

Kern der Erfindung besteht hierbei darin, daß das Meßrohr und die magnetische Polanordnung samt Spule und Polblechen einstückig, d.h. im ganzen von einem Thermoplast umspritzt sind.

Hierbei entsteht durch die Verwendung eines Thermoplastenmaterials keine Rißempfindlichkeit mehr.

In weiterer vorteilhafter Ausgestaltung und in entsprechender vorteilhafter Kombination mit den Merkmalen des Patentanspruches 1 ist weiterhin ausgestaltet, daß das Meßrohr nicht vom Thermoplasten gebildet wird, sondern separat aus einem Kunststoffelement mit entsprechend integral enthaltenen Elektroden besteht.

In vorteilhafter Weise besteht das Meßrohr dabei aus Kunststoff.

In weiterer vorteilhafter Ausgestaltung ist vorgesehen, daß die Umspritzung mit dem Thermoplasten auch den gesamten Zwischenraum zwischen Spule, Polblechen und Meßrohr ausfüllt. Hierdurch entsteht ein inniger und schlüssiger Verschluß gegen Feuchtigkeit und mechanische Einwirkungen, bezogen auf die empfindlichen Elemente der Einrichtung.

In weiterer vorteilhafter Ausgestaltung ist angegeben, daß die Thermoplastumspritzung im Bereich der Anschlüsse zur integrierten Aufnahme eines Klemmenraumes ausgenommen ist.

Hierdurch braucht kein zusätzlicher Klemmenkasten für die Aufnahme der Klemmanordnung aufmontiert werden, sondern derselbe ist zumindest teilweise integriert in der Umspritzung enthalten. Dadurch wird die Bauform im übrigen sehr kompakt.

In weiterer vorteilhafter Ausgestaltung ist angegeben, daß die Elektroden im Kunststoffmeßrohr integriert angeordnet sind. Dies vereinfacht im übrigen auch die Montage.

In weiterer vorteilhafter Ausgestaltung ist angegeben, daß die Spule und die magnetische Polanordnung mit magnetischer Rückführung auf dem Kunststoffrohr montiert sind, welches sodann vom Thermoplasten umspritzt und somit schlüssig eingehüllt wird.

Somit besteht der wesentliche Unterschied zum eingangs genannten Stand der Technik darin, daß zum einen kein rißempfindlicher Epoxidharz, sondern ein rißresistenter Thermoplast eingesetzt wird. Darüber hinausgehend ist von sehr großem Vorteil, daß gegenüber der Einrichtung der eingangs genannten bekannten Art das Maßrohr nicht von der Umspritzung gebildet wird, sondern aus einem separaten Kunststoffrohr gebildet wird. Somit sind Rißentstehungen im Meßrohrbereich, selbst bei Druckbelastung nahezu ausgeschlossen. Im übrigen kann auf diese Weise eine besser plazierte Anordnung der Elektroden vorgefertigt werden, anstatt diese, wie beim eingangs dargestellten Stand der Technik zunächst recht empfindlich und filigran aufzubauen und sodann in dem Vergußblock mit einzuspritzen. Auf diese Weise ist im Stand der Technik keine reproduzierbare Position der Elektroden gegeben, wodurch Abweichungen der Geräte untereinander möglicherweise sogar in ganz erheblichem Maße entstehen.

Beim Gegenstand der vorliegenden Anmeldung sind diese Probleme beseitigt, und die Mithinzunahme eines Meßrohres mit bereits integrierten Elektroden gewährleistet reproduzierbare Parameter in der Serienfertigung.

Die Erfindung ist in der Zeichnung dargestellt und nachfolgend näher beschrieben.

Es zeigt:
- Fig. 1:: Eine Schnittteildarstellung des Durchflußmeßgerätes in einem Fertigungsschritt.
- Fig. 2:: Gleiche Perspektive wie in Figur 1, jedoch mit bereits durchgeführter Thermoplastumspritzung.
- Fig. 3:: Draufsicht auf Klemmenanordnung.

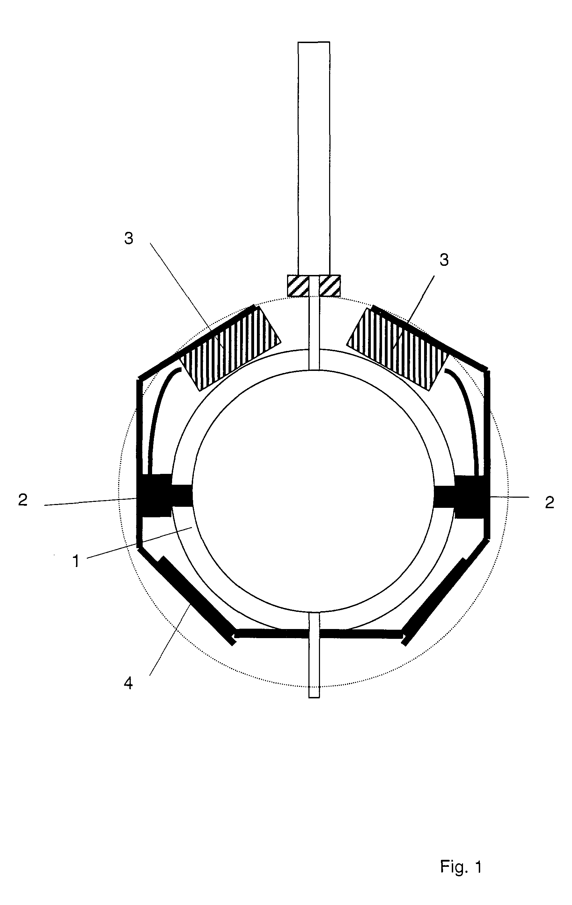

Figur 1 zeigt die wesentlichen Elemente des Durchflußmeßgerätes. Im Zentrum ist auch hierbei das vorgefertigte Kunststoffmeßrohr 1 zu erkennen, in welchem bereits die Elektroden 2 integriert angeordnet sind. Um das Kunststoffmeßrohr herum wird sodann der Aufbau von Spule 3 und magnetsicher Polanordnung 4 mit Rückführblechen und dergleichen vorgenommen. Das heißt, das vorbereitete Meßrohr enthält zum einen bereits integriert und somit reproduzierbar in ihrer örtlichen Ausrichtung alle notwendigen Meß- und Erdungselektroden. Gleichzeitig dient das Kunststoffmeßrohr 1 als Aufbauträger für die besagten Elemente Spule 3 und magnetische Polanordnung 4. Diese werden auf dem Kunststoffrohr montiert und bei Abschluß dieser Vormontage wird die Anordnung sodann von außen umspritzt. Hierbei wird die Umspritzung mit dem Thermoplastmaterial so vorgenommen, daß sich auch der Zwischenraum zwischen Meßrohr 1 und den einzelnen Spulen 3 und Polelementen 4 mit dem Thermoplast ausfüllt. Die Umspritzung findet dabei in einem solchen Umfang statt, daß die gesamte Anordnung anschließend von außen auch die gehäusemäßige Abgrenzung bildet. Ein zusätzliches Gehäuse ist damit nicht mehr notwendig.

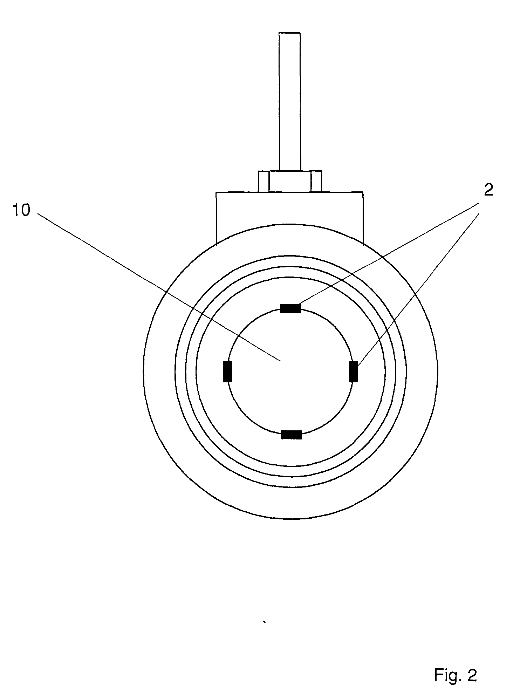

Figur 2 zeigt in gleicher Perspektive das fertig umspritzte Durchflußmeßgerät. Hierbei ist die durch das Meßrohr 1 gegebene Öffnung 10 für das später durchfließende Meßmedium sowie an der Meßrohrinnenwand austretende Elektroden 2 zu erkennen. Nach außen entsteht eine schlüssige gehäusemäßige Oberfläche, innerhalb der alle oben genannten Elemente samt Meßrohr 1 nunmehr miteinander verbunden und thermoplastisch umspritzt sind. Durch die Verwendung des Thermoplasten sind bei Wechseltemperatur- und auch bei Wechseldruckbeanspruchung Rißempfindlichkeiten vermieden.

Dies gewährleistet natürlich einen somit dauerhaften mechanischen und Feuchtigkeitsschutz.

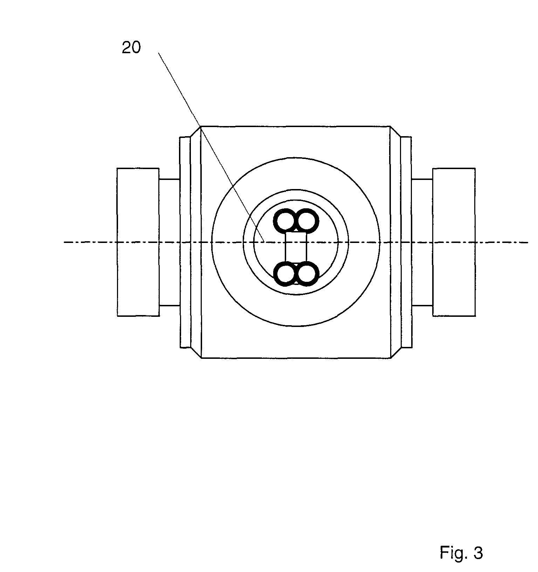

Figur 3 zeigt eine Draufsicht auf das bereits fertig umspritzte Durchflußmeßgerät, von oben, wodurch der Blick in den integrierten Klemmenkasten 20 gegeben ist. Dieser wird entsprechend angeformt und sitzt zumindest teilweise im Gehäuse oder bildet einen Gehäusevorsprung, der jedoch einstückig mit dem übrigen Thermoplastmaterial verbunden ist. Innerhalb des selben liegen die von den magnetischen und elektrodenseitigen Kabeln verlaufenden Enden, um die selben an entsprechende Meßgeräte anschließen zu können. Somit wird die Anordnung nur noch von einem hier nicht weiter dargestellten Deckel verschlossen, aus dem heraus dann entsprechende Kabel geführt sind.

## Patentansprüche

1. Magnetisch-induktives Durchflußmeßgerät mit einem Meßrohr und einem das Meßrohr umgebenden Magnetsystem sowie Meß- und Erdungselektroden,
**dadurch gekennzeichnet,**
**daß** das Meßrohr (1) und die magnetische Polanordnung (4) samt Spule (3) und Polblechen einstückig von einem Thermoplast umspritzt sind.

2. Durchflußmeßgerät nach Anspruch 1,
**dadurch gekennzeichnet,**
**daß** das Meßrohr (1) aus Kunststoff besteht und vor Umspritzung vorgefertigt ist.

3. Durchflußmeßgerät nach Anspruch 1 oder 2,
**dadurch gekennzeichnet,**
**daß** die Umspritzung mit dem Thermoplastmaterial auch den gesamten Zwischenraum zwischen Spule (3) , magnetischer Polanordnung (4) und Meßrohr (1) ausfüllt.

4. Durchflußmeßgerät nach Anspruch 1 oder 2,
**dadurch gekennzeichnet,**
**daß** die Thermoplastumspritzung im Bereich der Anschlüsse zur integrierten Aufnahme eines Klemmenraumes (20) ausgenommen ist.

5. Durchflußmeßgerät nach einem der vorhergehenden Ansprüche,
**dadurch gekennzeichnet,**
**daß** die Elektroden (2) integriert im aus Kunststoff bestehenden Meßrohr (1) angeordnet sind.

6. Durchflußmeßgerät nach einem der vorhergehenden Ansprüche,
**dadurch gekennzeichnet,**
**daß** Spule (3) und magnetische Polanordnung (4) mit magnetischer Rückführung auf dem aus Kunststoff bestehenden Meßrohr (1) montiert ist, welches vom - Thermoplasten umspritzt wird.
